# EUROPEAN PATENT APPLICATION

(11) **EP 1 266 806 A2**
(43) Date of publication of application: **18.12.2002**
(21) Application number: 02012493.9
(22) Date of filing: 12.06.2002
(51) Int. Cl.: B60R 21/16

(54) **Airbag device**

(30) Priority: 14.06.2001 JP 2001180355
(71) Applicant: TAKATA CORPORATION, Minato-ku, Tokyo 106-8510 (JP)
(72) Inventor: Abe, Kazuhiro, Minato-ku, Tokyo 106-8510 (JP)
(74) Representative: Banzer, Hans-Jörg, Dipl.-Ing.

(57) **Abstract**

In order to provide an airbag device capable of inflating an airbag such that a large passenger confronting area can be obtained thoroughly promptly even if a gas generator has low gas pressure, for folding the airbag (1), first, a first-processed triangular folded member (1') is formed by folding the regions outside of the segments (L₁) of a triangle inwardly of the airbag (1). Next, a second-processed hexagonal folded member (1") is formed by folding the regions outside of the three segments (L₂) of the first-processed triangular folded member (1') inwardly thereof. Next, a third-processed dodecagonal folded member (1''') is formed by folding the regions outside of the segments (L₃) of the vicinities of the six apexes of the second-processed hexagonal folded member (1"). The third-processed folded member (1"') is attached to a retainer together with a gas generator and covered with a module cover, and the module cover is attached to the retainer to thereby arrange an airbag device.

## Description

### [Technical Field of the Invention]

The present invention relates to an airbag device disposed in a high speed moving body such as an automobile and the like for protecting passengers in the occurrence of collision, and the like.

### [Description of the Related Art]

Automobiles are equipped with various types of air bag devices used in a driver's seat, an assistant driver's seat, and a rear seat and used to protect passengers' legs. The airbag device includes a folded airbag, a case in which the airbag folded member is accommodated, a gas generator for inflating the airbag folded member.

### [Problems to be Solved by the Invention]

Conventional airbag folded members are arranged by folding flatly deployed airbags to the front or rear side thereof. When the airbag folded members are inflated, the gas expelled from the gas generator must reach the outer peripheral side of the airbag positioned across the folded lines by passing through the folded lines.

An object of the present invention is to provide an airbag device arranged such that an airbag can be inflated sufficiently promptly even if the gas generated by a gas generator is with low pressure. Another object of the present invention is to provide an airbag device arranged such that an air bag is deployed promptly sidewards (up, down, right, left, and the like when viewed from a passenger).

### [Means for Solving the Problems]

According to the present invention, this object is achieved by an airbag device as defined in claim 1. The dependent claims define preferred and advantageous embodiments of the invention.

The airbag device of the present invention including a folded airbag composed of a front surface confronting a passenger and a rear surface opposite to the front surface, a case accommodating the airbag, and a gas generator for inflating the airbag is characterized in that the airbag is arranged as a first-processed folded member by folding the peripheral edge of the airbag to be inserted into thereof at a plurality of portions from a flatly deployed state in which the airbag is flatly deployed such that the front surface overlaps the rear surface, and a second-processed folded member is arranged by folding the peripheral edge of the first-processed folded member to be inserted into thereof at a plurality of portions.

The size of the airbag device of the present invention arranged as described above is reduced to a predetermined size only by folding the outer periphery of the airbag folded member so as to be swallowed inwardly.

When gas is supplied to the airbag folded member from the gas generator, the inwardly folded portions are inflated by the pressure of the gas in an outward direction opposite to the folded direction thereof (sideward of the airbag) so as to be pushed out. Further, when the airbag is inflated, the gas simply pushes the folded portions of the airbag and need not pass through folded lines as required in conventional art, which permits the folded portions to be promptly pushed and deployed side-outwardly even if the gas pressure is low. Accordingly, the airbag is deployed sideward thoroughly promptly even if the pressure of the gas generated by the gas generator is low.

### [Embodiments]

Embodiments will be described below with reference to drawings.

### [Brief Description of the Drawings]

FIG. 1 is a rear perspective view of an inflated state of an airbag of a driver's seat airbag device according to an embodiment of the invention.
FIG. 2(a) is a sectional view taken along the line IIa-IIa of FIG. 3(a), and FIG. 2(b) is a sectional view taken along the line IIb-IIb of FIG. 3(b).
FIG. 3(a) is a plan view of a flatly deployed state of the airbag when it is flatly deployed, and FIG. 3(b) is a plan view of a first-processed folded member of the airbag.
FIG. 4 is a plan view of a second-processed folded member of the airbag.
FIG. 5 is a plan view of a third-processed folded member of the airbag.
FIG. 6 is a folding sequence view of another embodiment.
FIG. 7 is a folding sequence view of still another embodiment.

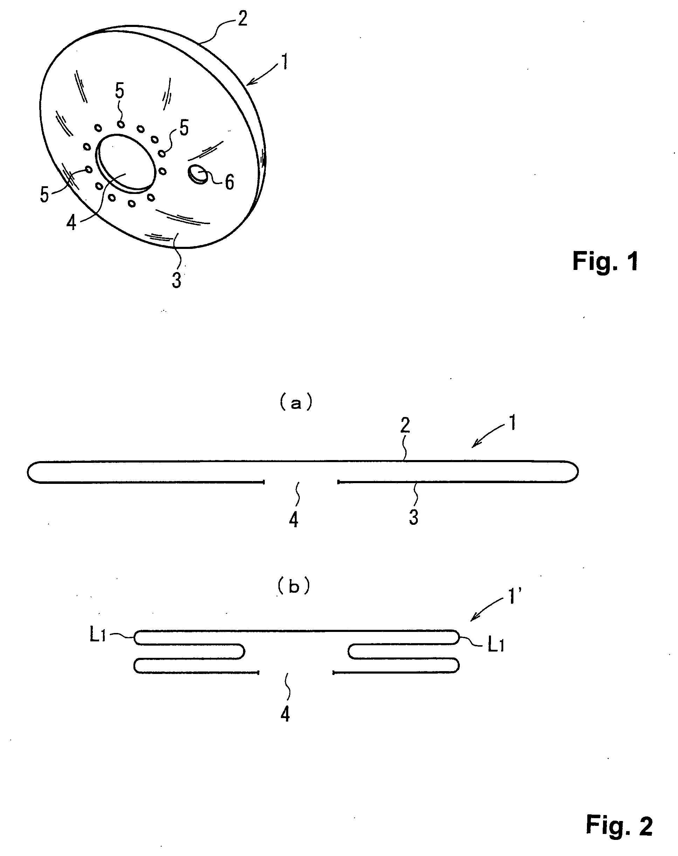

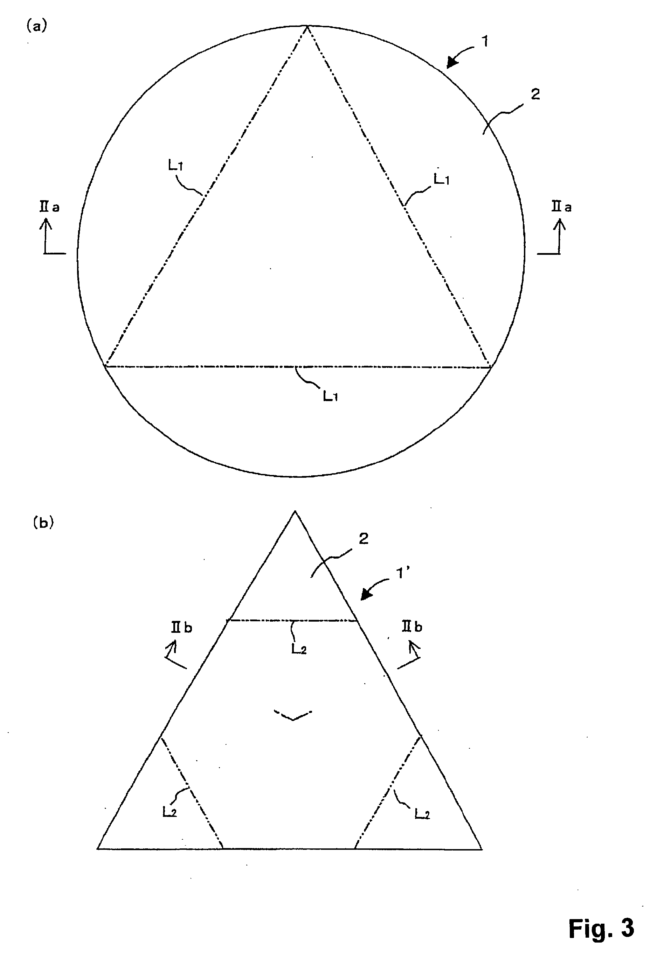

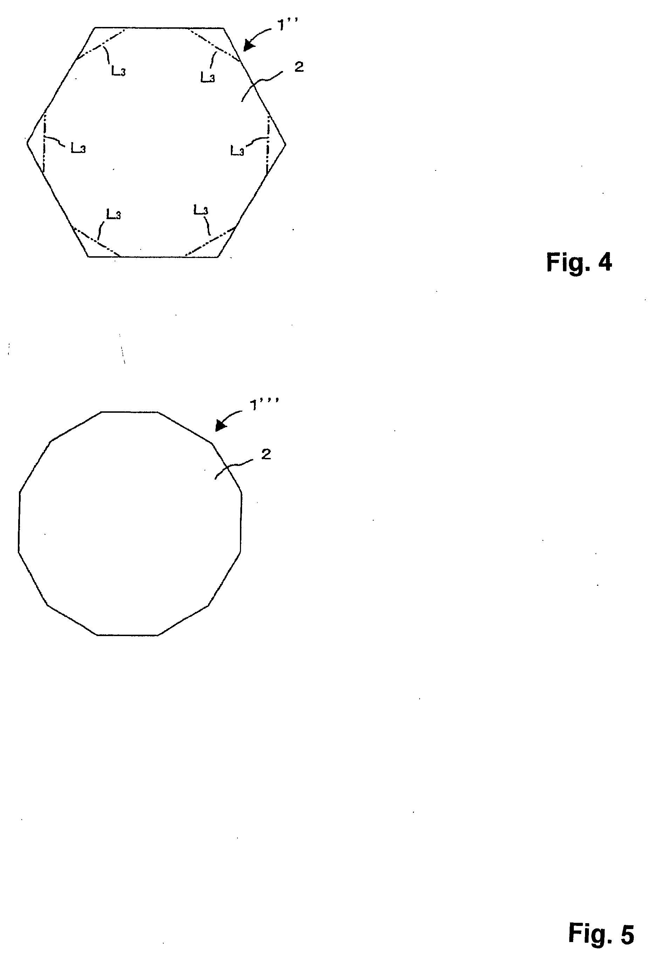

FIG. 1 is a rear perspective view of an inflated state of an airbag of a driver's seat airbag device according to an embodiment, FIG. 2(a) is a sectional view taken along the line IIa-IIa of FIG. 3(a), FIG. 2(b) is a sectional view taken along the line IIb-IIb of FIG. 3(b), FIG. 3(a) is a plan view of a flatly deployed state of the airbag when it is deployed flatly, FIG. 3(b) is a plan view of a first-processed folded member of the airbag, FIG. 4 is a plan view of a second-processed folded member of the airbag, and FIG. 5 is a plan view of a third-processed folded member of the airbag.

The airbag 1 is composed of a front panel 2 and a rear panel 3 each formed circularly, and the peripheral edge portions of the front panel 2 and the rear panel 3 are coupled with each other by sewing, and the like. The rear panel 3 has an opening 4 defined at the center thereof into which a gas generator (inflator) is inserted. Further, insertion holes 5 for bolts, rivets, and the like used to attach the airbag 1 to a retainer are defined around the opening 4 of the rear panel 3. Further, a vent hole 6 is defined through the rear panel 3.

When the airbag is folded, first, the regions outside of the segments L₁ of an inscribed triangle shown in FIG. 3(a) are folded so as to be swallowed into the airbag 1, thereby a first-processed triangular folded member 1' is formed. Next, the vicinities of the three apexes of the first-processed triangular folded member 1', that is, the regions outside of the three segments L₂ in FIG. 3(b) are folded so as to be swallowed inwardly of the first-processed folded member 1', thereby a second-processed hexagonal folded member 1" is formed. Note that the intersecting points where the three sides of the first-processed folded member 1' intersect the respective segments L₂ are located at the trisected positions of the three sides of the first-processed folded member 1'.

Next, the vicinities of the six apexes of the second-processed hexagonal folded member 1", that is, the regions outside of the six segments L₃ in FIG. 4 are folded so as to be swallowed inwardly of the second-processed folded member 1", thereby a third-processed dodecagonal folded member 1''' is formed. The third-processed folded member 1''' is attached to the retainer together with the gas generator(inflator) and covered with a module cover, and the module cover is attached to the retainer to thereby arrange the airbag device. Note that in case the third-processed folded member 1''' of FIG. 5 is too large to be assembled to the airbag device, a fourth-processed folded member is formed by further folding the outer edge of the third-processed folded member 1''' inwardly thereof, and further fifth- and more-processed folded members are arranged, when necessary, in order to obtain a folded member having a size suitable to assemble it to the airbag device.

In the airbag device having the airbag arranged as described above, when the gas generator ejects gas, the airbag folded member is inflated by the pressure of the gas in such a manner that folded portions are pushed out. When the airbag folded member is inflated, the folded portions begin to inflate by being pushed out as if a piston is moved by the pressure of gas applied thereto. Then, the gas needs not flow beyond the folded lines by passing through them as in a conventional airbag folded member. Since the airbag of the present invention is inflated in such a manner that the folded portions are pushed as they are by the gas pressure, the airbag is inflated very smoothly, thereby the airbag can be inflated thoroughly promptly even if the gas has low pressure. Moreover, the airbag is inflated so as to be deployed sideward (all the up, down, right and left directions when viewed from a passenger) promptly and a deployment toward the passenger is restricted due to the folding manner described above. That is, the airbag is deployed such that the area thereof facing the passenger is increased at an early time after the collision of a vehicle is detected. Note that when the pressure of the gas generated by the gas generator is low, the strength required to the front panel 2 and the rear panel 3 can be reduced as well as the front panel 2 can be coupled with the rear panel 3 by low coupling strength. Further, the inflating speed of the airbag toward the passenger can be also reduced.

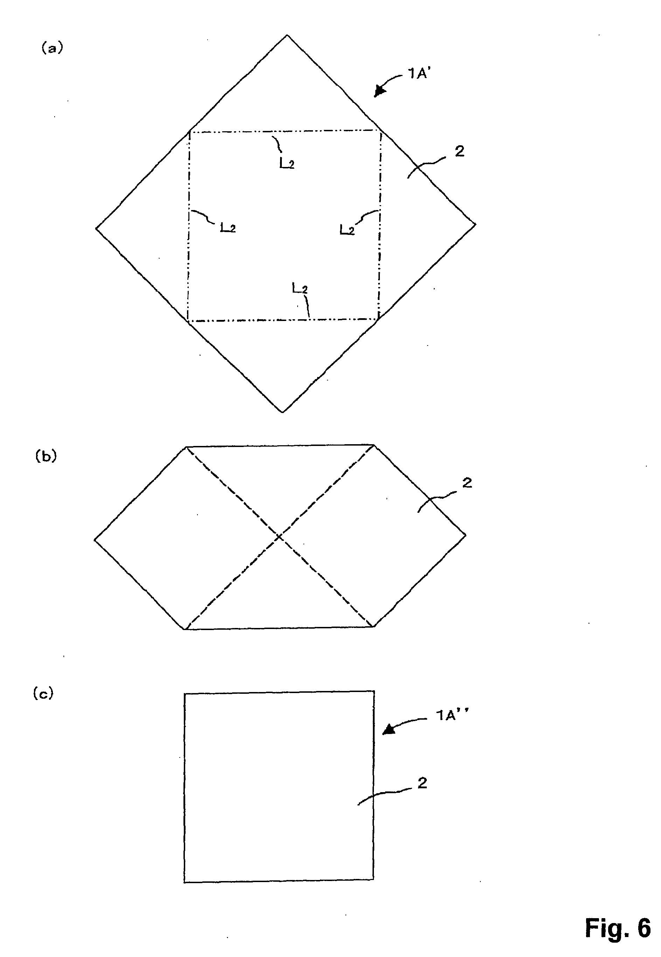

Fig. 6 is a plan view showing a folding sequence for folding an airbag according to another embodiment of the present invention. In FIG. 6, the peripheral edge of the airbag 1 in the flatly deployed state shown in FIG. 2(a) and FIG. 3(a) is folded so as to be swallowed inwardly from four directions, thereby a first-processed square folded member 1A' is formed. The regions outside of the four segments L₂ constituting the inscribed quadrangle of the first-processed folded member lA' are folded so as to be swallowed inwardly thereof, thereby a second-processed square folded member 1A" is formed. An airbag device is arranged by attaching the second-processed folded member 1A" or a third- or more-processed folded members, which are formed by folding the peripheral edge of the second-processed folded member 1A" to arrange a smaller quadrangle, to a retainer.

Note that FIG. 6(b) shows a mid-state of folding in which the regions outside of two parallel segments L₂ are folded so as to be swallowed inwardly of the first-processed folded member.

The intersecting points at which the respective segments L₂ intersect the four sides of the first-processed folded member 1A' are located at the mid-points of the four sides.

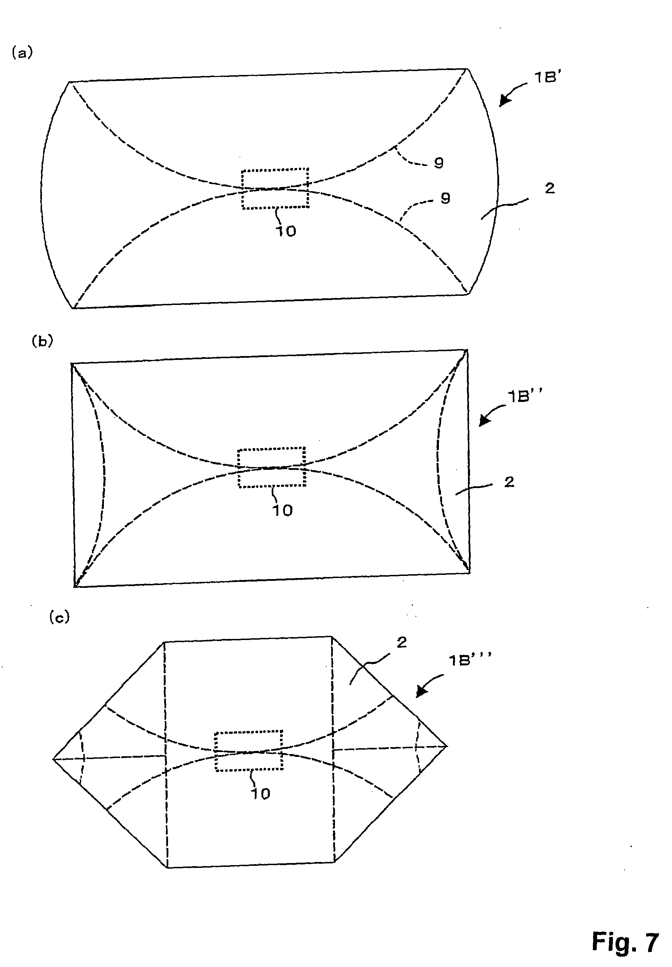

Fig. 7 is a plan view showing a folding sequence for folding an airbag according to still another embodiment. In FIG. 7, a first-processed folded member 1B' is formed by folding the two confronting portions of the airbag 1 in the flatly deployed state shown in FIG. 2(a) and FIG. 3(a) so as to be swallowed inwardly. Then, the folded portions 9, 9 are sewed to the airbag 1 through a tear seam 10. The tear seam 10 has such a degree of strength that it is broken when the airbag is inflated and is used for temporal tacking.

Accordingly, the first-processed folded member 1B' is formed in a drum shape having two straight side portions and two arc-shaped side portions. The two arc-shaped side portions of the first-processed folded member 1B' is folded so as to swallowed inwardly thereof, thereby a second-processed rectangular folded member 1B'' is formed. The four corner portions of the second-processed folded member 1B'' are folded inwardly thereof, thereby a third-processed folded member 1B''' is formed. Fourth- or more-processed folded members are formed by further folding the corner portions of the third-processed folded member 1B''' inwardly, when necessary.

An airbag device is arranged by attaching the airbag folded as described above to a retainer.

The airbags formed as the folded members according to the sequences of FIGS. 5, 6, and 7 are also inflated promptly so that they have a large passenger confronting area when gas is ejected from the gas generator. Further, the inflation is made thoroughly promptly even if the gas pressure of the gas generator is low.

Note that when the airbag folded by the sequence of FIG. 7 is inflated, tear seam 10 is broken after it is first inflated breadthways long, thereby the airbag is also deployed up and down in FIG. 7(a). Accordingly, it is possible, for example, to deploy a driver's seat airbag first in a direction of right and left of the occupant, and then deploy the airbag in a direction of up and down of the occupant.

While not shown, the present invention can be applied to various types of air bags used in an assistant driver's seat and a rear seat and used to protect passengers' legs.

### [Advantages]

As described above, according to the airbag device of the present invention, it is possible to inflate an airbag such that the area thereof has a large passenger confronting area thoroughly promptly even if a gas generator has low gas pressure.

## Claims

1. An airbag device including a folded airbag (1) composed of a front surface (2) confronting a passenger and a rear surface (3) opposite to the front surface, a case accommodating the airbag, and a gas generator for inflating the airbag (1), **characterized in that** the airbag (1) is arranged as a first-processed folded member (1'; 1A'; 1B') by folding the peripheral edge of the airbag (1) to be inserted into thereof at a plurality of portions from a flatly deployed state in which the airbag (1) is flatly deployed such that the front surface (2) overlaps the rear surface (3), and a second-processed folded member (1"; 1A"; 1B") is arranged by folding the peripheral edge of the first-processed folded member (1'; 1A'; 1B') to be inserted into thereof at a plurality of portions.

2. An airbag device according to claim 1, wherein the airbag (1) is a more-processed folded member (1'''; 1B''') arranged by further folding the outer peripheral edge of the second-processed folded member (1", 1B") repeatedly at a plurality of portions until the size of the folded member is reduced such that it can be accommodated in the case.

3. An airbag according to claim 1 or 2, wherein a part (9) of the folded member is joined by temporary joint means (10), the airbag (1) can be inflated preferentially at a portion other than a portion joined by the temporary joint means (10), and the temporary joint means (10) releases a joint when a force larger than a predetermined value is applied thereto.
